Europäisches Patentamt

European Patent Office

Office européen des brevets

(11) Veröffentlichungsnummer: **0 325 166**
**A2**

## (12) EUROPÄISCHE PATENTANMELDUNG

(21) Anmeldenummer: **89100513.4**

(22) Anmeldetag: **13.01.89**

(51) Int. Cl.⁴: **G11B 15/18 , G11B 5/53**

(30) Priorität: **21.01.88 DE 3801622**

(43) Veröffentlichungstag der Anmeldung:
**26.07.89 Patentblatt 89/30**

(84) Benannte Vertragsstaaten:
**AT BE CH DE ES FR GB GR IT LI LU NL SE**

(71) Anmelder: **Deutsche Thomson-Brandt GmbH
Hermann-Schwer-Strasse 3 Postfach 1307
D-7730 Villingen-Schwenningen(DE)**

(72) Erfinder: **Schalk, Adelbert
Vogt Dufner Strasse 8
D-7743 Furtwangen 6(DE)**

(74) Vertreter: **Körner, Peter, Dipl.-Ing.
Deutsche Thomson-Brandt GmbH Patent-
und Lizenzabteilung Göttinger Chaussee 76
D-3000 Hannover 91(DE)**

(54) **Kopfradanordnung für einen Recorder.**

(57) Bei einer Kopfradanordnung, bei der das rotierende Kopfrad (8) durch einen Axialantrieb mit einer
Spindel (6) und einer Mutter (11) zusätzlich eine
periodische Hubbewegung (34) ausführt, sollen
Schwankungen des Drehmomentes pro Spindelumdrehung verringert werden.

Die Mutter (11) ist ein zwei getrennte, gegeinander nicht verdrehbare, durch eine Feder (40) in Richtung der Achse A gegeneinander verspannte Teilmuttern (11a,11b) aufgeteilt, wodurch ein Spiel zwischen Spindel (6) und Mutter (11) ausgeglichen wird.

Insbesondere für eine sogenannte matrixartige
Aufzeichnung mit einer Hubbewegung quer zur
Längsrichtung des Magnetbandes gemäß der DE-OS
35 09 584.

Fig.2

EP 0 325 166 A2

## Kopfradanordnung für einen Recorder

Die Erfindung geht aus von einer Kopfradanordnung für einen Recorder gemäß dem Oberbegriff des Anspruchs 1.

Eine derartige Kopfradanordnung mit einer periodischen Hubbewegung des Kopfrades wird benötigt für eine sogenannte matrixartige Aufzeichnung in aufeinanderfolgenden Blöcken mit etwa parallel zur Bandkante verlaufenden Spuren gemäß der DE-OS 35 09 584. Bei einer besonderen Ausbildung einer derartigen Kopfradanordnung gemäß der DE-OS 35 42 064 ist das rotierende Kopfrad auf einer in gleicher Richtung rotierenden Gewindespindel gelagert, deren Rotationsgeschwindigkeit zur Erzeugung der Hubbewegung durch eine Steuerspannung veränderbar ist.

Bei einer derartigen Kopfradanordnung wird an die Genauigkeit der Hubbewegung eine hohe Anforderung gestellt, zumal die Breite der durch die Hubbewegung nacheinander geschriebenen Spuren nur etwa 10 bis 20 $\mu$m beträgt.

Es hat sich gezeigt, daß derartige Antriebe mit einer Spindel und einer Mutter, bei der eine Rotationsbewegung in eine Translationsbewegung umgesetzt wird, Schwankungen im Drehmoment pro Spindelumdrehung insbesondere durch eine mechanische Überbestimmung und dadurch Ungenauigkeiten in der an sich linearen Translationsbewegung auftreten.

Der Erfindung liegt die Aufgabe zugrunde, eine Kopfradanordnung der beschriebenen Art so auszubilden, daß Schwankungen im Drehmoment durch mechanische Überbestimmung beseitigt werden und eine Hubbewegung mit großer Genauigkeit erzielt wird.

Diese Aufgabe wird durch die im Anspruch 1 beschriebene Erfindung gelöst. Vorteilhafte Weiterbildungen der Erfindung sind in den Unteransprüchen beschrieben.

Bei der erfindungsgemäßen Lösung wird somit die Mutter des Spindelantriebes in zwei Teilmuttern aufgeteilt, die gegeneinander nicht verdrehbar, aber durch eine Feder in Axialrichtung verspannt sind. Dadurch wird erreicht, daß beide Teilmuttern stets an den jeweiligen Gewindeflanken anliegen und kein Spiel mehr zwischen der Mutter und der Spindel besteht. Vorzugsweise ist eine der Teilmutter mit einem die Spindelwelle aufnehmenden Lagerteil so verbunden, daß die Mutter sich relativ zu dem Lagerteil in Richtung der Achse nicht bewegen kann, jedoch quer zur Achse, also in Radialrichtung nachgiebig ist. Dadurch wird erreicht, daß Rundlauffehler des Spindelgehäuses bzw. der Spindelmittellinie von einigen $\mu$m eine seitliche Auslenkung der Muttern ohne nennenswerte Rückwirkung auf das Lagerteil bewirken. Dabei wird der Tatsache Rechnung getragen, daß Rundlauffehler des als Drehteil hergestellten Lagerteils und der darin gelagerten Welle fertigungstechnisch sehr gering gehalten werden können, während die Rundlauffehler durch das zwischen Spindel und Mutter vorhandene Gewinde wesentlich größer sind. Durch die Verringerung der Drehmomentschrankungen pro Spindelumdrehung wird die Regelbarkeit der mit Spindel und Mutter verbundenen Motoren im Sinne einer linearen Hubbewegung mit gewünschter Lineargeschwindigkeit und Amplitude verbessert.

Die erfindungsgemäße Lösung ist besonders vorteilhaft anwendbar bei der genannten Kopfradanordnung gemäß der DE-OS 35 42 064, bei der das rotierende Kopfrad auf einer ebenfalls rotierenden Spindel gelagert ist und die Drehzahl der Spindel zur Erzeugung der Hubbewegung geändert wird. Die Erfindung ist jedoch auch anwendbar bei einer Kopfradanordnung mit einer Spindel und einer Mutter, bei der ein nichtro tierendes, in Axialrichtung verstellbares Teil der Kopfradanordnung über einen Axialantrieb mit einer Spindel und einer Mutter angetrieben wird und das nicht in Axialrichtung verschiebbare Teil des Axialtriebs an jeweils eines von zwei gegensinnig rotierenden Antriebsrädern ankuppelbar ist. Eine derartige Kopfradanordnung ist beschrieben in der älteren Patentanmeldung P 37 32 791.

Die Erfindung wird im folgenden anhand der Zeichnung an einem Ausführungsbeispiel erläutert. Darin zeigen

Fig. 1 eine an sich bekannte Kopfradanordnung zusammen mit der erfindungsgemäßen Lösung,

Fig. 2 Einzelteile des die Hubbewegung bewirkenden Antriebs mit einer Spindel und einer Mutter und

Fig. 3 eine besondere Ausbildung der in Fig. 1, 2 verwendeten Blattfeder.

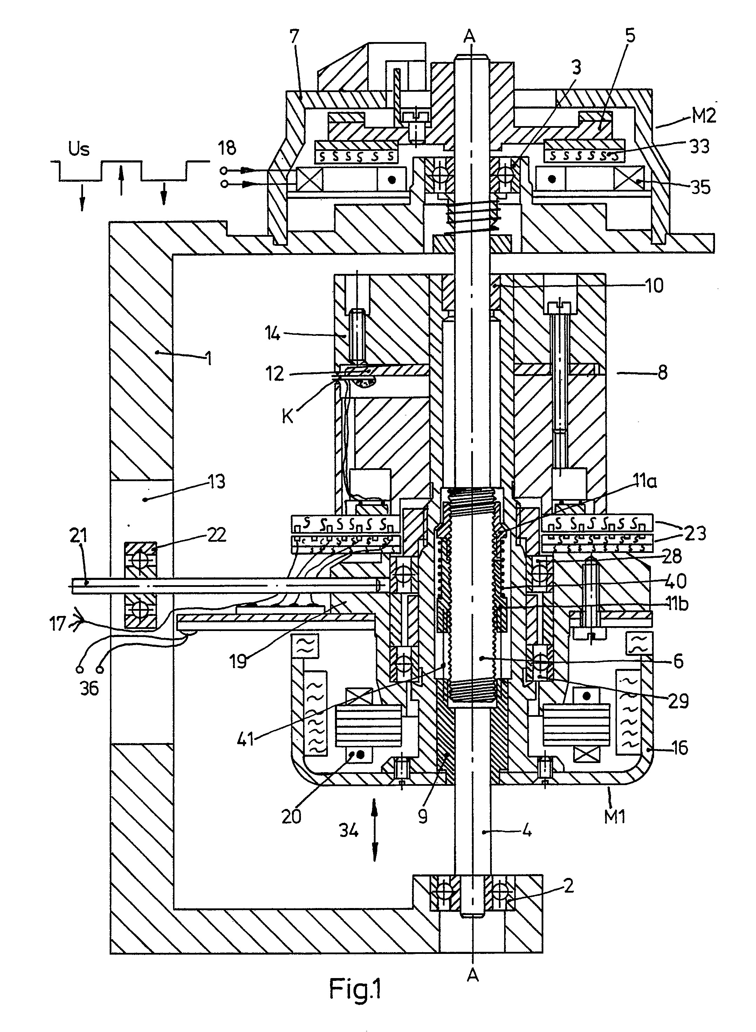

Fig. 1 zeigt eine Kopfradanordnung, wie sie in der DE-OS 35 42 064 beschrieben ist. Dabei sind gleiche Teile in dieser OS und in der Fig. 1 mit gleichen Bezugsziffern versehen. In dem ortsfesten Rahmen 1 ist mittels Lager 2,3 die die Gewindespindel 6 tragende Welle 4 drehbar, aber axial unverschiebbar gelagert. Das obere Ende der Welle 4 ist mit dem Rotor 5 des Motors M2 verbunden, dessen Stator 7 fest mit dem Rahmen 1 verbunden ist. Das Kopfrad 8, das die Kopfscheibe 12 mit mehreren über den Umfang verteilten Köpfen K sowie die Trommel 14 enthält, ist über die Gleitlager 9,10 drehbar auf der Welle 4 gelagert. Die Spindel 6 greift in die mit der Trommel 14 verbundene Mutter 11 ein. Die Signale werden von den Köpfen K über die rotierenden Übertrager 23 und die flexiblen Leitungen 17 den Aufnahme- oder Wiedergabeverstärkern zugeführt. An der Trommel 14 ist außerdem der Rotor 16 des Motors M1 befestigt. Der Stator 19 des Motors M1 ist über die Lager 28,29 auf der Trommel 14 relativ zu dieser drehbar gelagert und enthält die Statorwicklung 20. Der Stator 19 ist über den Stift 21 und das Lager 22 so mit dem Rahmen 1 verbunden, daß der Stift 21 in dem Schlitz 13 des Rahmens 1 in Richtung der Achse A bewegbar ist, jedoch eine Drehung des Stators 19 verhindert.

Die Teile 9,10,11,12,K,14,16 bilden den um die Achse A rotierenden Teil der Kopfradanordnung. Die Teile 19,20,21 bilden den Teil der Kopfradanordnung, der nicht rotieren kann, aber in Richtung der Achse A verschiebbar ist.

Die Wirkungsweise ist folgende: Der Motor M1 wird mit einer Geschwindigkeit von etwa 6.000 Upm angetrieben, so daß das Kopfrad 8 mit dieser konstanten Drehzahl um die Achse A rotiert. Die Welle 4 mit der Spindel 6 wird durch den Motor M2 in der gleichen Richtung wie das Kopfrad 8 und mit der gleichen Umdrehungszahl angetrieben. Wegen der gleichen Umdrehungszahlen besteht zwischen der Spindel 6 und der Mutter 11 keine Relativbewegung, so daß das Kopfrad 8 rotiert, in Richtung der Achse A jedoch nicht bewegt wird. Mit der Steuerspannung Us an den Klemmen 18 der Wicklung 35 des Motors M2 wird die Drehzahl des Motors M2 periodisch erhöht und verringert, z.B. zwischen 5.990 und 6.010 Upm. Durch die dann auftretende Drehzahldifferenz zwischen Spindel 6 und Mutter 11 entsteht die Hubbewegung 34 des Kopfrades 8.

Im Gegensatz zu der bekannten Kopfradanordnung ist die Mutter 11 in zwei getrennte Teilmuttern 11a und 11b aufgeteilt, die gegeneinander nicht verdrehbar, aber in Axialrichtung gegeneinander verschiebbar sind. Die beiden Teilmuttern 11a und 11b werden durch die zwischen ihnen angeordnete Feder 40 auseinandergedrückt, also gegeinander verspannt, so daß unabhängig von Toleranzen das Innengewinde der Teilmuttern 11a and 11b stets an den jeweiligen Gewindeflanken der Spindel 6 anliegt und ein Spiel ausgeglichen wird. Die Teilmutter 11b ist über zwei in Richtung der Achse A liegende dünne Blattfedern 42 mit dem die Welle 4 aufnehmenden, zum Rotor 16 gehörenden Gleitlager 9 verbunden. Die Teilmutter 11b kann sich dadurch in erwünschter Weise gegenüber dem Gleitlager 9 in Richtung der Achse A nicht verschieben. Andererseits jedoch kann die Teilmutter 11b in Radialrichtung, also quer zur Achse A ausweichen. Die Teilmutter 11b hat also in erwünschter und vorteilhafter Weise gegenüber dem Gleitlager 9 nur einen Freiheitsgrad quer zur Achse A.

Der Rundlauffehler des Gewindes der Spindel 6 oder der Spindelmittellinie von einigen μm bewirkt also eine seitliche Auslenkung der Teilmuttern 11a und 11b, ohne daß dadurch eine Rückwirkung auf das praktisch keine Rundlauffehler aufweisende Gleitlager 9 entsteht. Die Größe des Rundlauffehlers ist entscheidend für die Konstanz der Spurbreite bei der genannten matrixartigen Aufzeichnung.

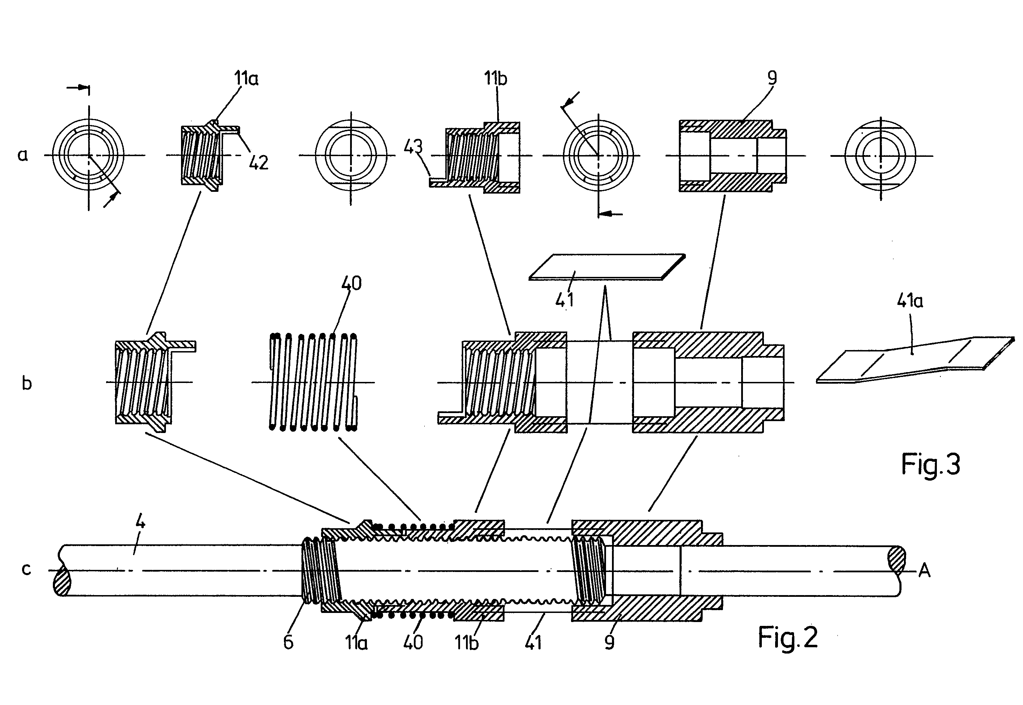

In Fig. 2a bis c sind die beiden Teilmuttern 11a,11b, die Feder 40 und das Gleitlager 9 getrennt dargestellt, wobei die geraden Linien jeweils gleiche Teile miteinander verbinden. Fig. 2a zeigt die Teilmutter 11a mit dem Steg 42 und die Teilmutter 11b mit dem Steg 43 sowie das Gleitlager 9. Gemäß Fig. 2b sind die Teilmutter 11b und das Gleitlager 9 über zwei dünne Blattfedern 41 miteinander verbunden, während zwischen den Teilmuttern 11a und 11b die Druckfeder 40 vorgesehen ist. Die Stege 42 und 43 verhindern, daß die zusammengesteckten Teilmuttern 11a und 11b gegeneinander verdrehbar sind, ermöglichen aber eine Axialverschiebung der Teilmuttern 11a und 11b für die genannte Verspannung. Fig. 2c zeigt die vollständige Anordnung. Auf der Spindel 6 sind die mit Innengewinde versehenen Teilmuttern 11a und 11b angeordnet und durch die Feder 40 in Richtung der Achse A gegeneinander verspannt. Die Teilmutter 11b ist über die beiden Blattfedern 42 mit dem Gleitlager 9 verbunden, das wie in Fig. 1 Bestandteil des Rotors 16 des Motors M1 ist.

In dem Beispiel wurde die axiale Verspannung der Teilmuttern 11a, 11b durch die Feder 40 erreicht. Diese Verspannung kann auch durch zwei Magnete in den beiden Teilmuttern 11a, 11b erreicht werden, die einander abstoßen und dadurch die Teilmuttern 11a, 11b in Axialrichtung auseinander drücken.

Fig. 3 zeigt eine besonders geformte Blattfeder 41a. Die Blattfeder 41a ist an zwei Stellen abgewinkelt, so daß die Oberfläche nicht in einer Ebene liegt. Durch diese Form der Blattfeder kann erreicht werden, daß die Blattfeder eine seitliche Kraft auf die Achse ausübt, also eine Kraft in Radialrichtung zur Achse A. Dadurch kann eine bestimmte gewünschte Grundreibung des Antriebs erreicht werden.

## Ansprüche

1. Kopfradanordnung für einen Recorder mit einem um eine Achse (A) rotierenden Kopfrad (8), das über einen Axialantrieb mit einer Spindel (6) und einer Mutter (11) für eine periodische Hubbewegung (34) in Richtung der Achse (A) bewegbar ist, **dadurch gekenzeichnet**, daß die Mutter (11) in zwei getrennte, gegeneinander nicht verdrehbare, in Richtung der Achse (A) gegeneinander verspannte Teilmuttern (11a,11b) aufgeteilt ist.

2. Anordnung nach Anspruch 1, **dadurch gekennzeichnet**, daß eine Teilmutter (11b) mit einem die Spindelwelle (4) aufnehmenden Lagerteil (9) in Axialrichtung unverschiebbar und in Radialrichtung nachgiebig verbunden ist.

3. Anordnung nach Anspruch 1, **dadurch gekennzeichnet**, daß die Verspannung der Teilmuttern (11a, 11b) durch eine Feder (40) oder durch einander abstoßende Magnete bewirkt ist.

4. Anordnung nach Anspruch 2, **dadurch gekennzeichnet**, daß die Teilmutter (11b) über axial gerichtete Blattfedern (41) mit dem Lagerteil (9) verbunden ist.

5. Anordnung nach Anspruch 4, **dadurch gekennzeichnet**, daß die Blattfeder (41a) derart gebogen ist, daß sie eine radial gerichtete Kraft auf die Achse ausübt.

6. Anordnung nach Anspruch 5, **dadurch gekennzeichnet**, daß die Blattfeder (41, 41a) eine solche Form hat, daß eine definierte Grundreibung des Antriebs erreicht ist.

Fig.1

Fig.3

Fig.2

41a

9

41

11b

43

40

11a

42

a

b

c

A

9

41

11b

40

11a

6

4